Europäisches Patentamt

European Patent Office

Office européen des brevets

(19)

(11) Publication number: **0 164 811**
**B1**

(12) **EUROPEAN PATENT SPECIFICATION**

(45) Date of publication of patent specification: **02.03.88**    (51) Int. Cl.⁴: **G 01 M 10/00**

(21) Application number: **85200926.5**

(22) Date of filing: **11.06.85**

(54) **Method and system for creating surface waves in a body of liquid.**

(30) Priority: **14.06.84 NL 8401887**

(43) Date of publication of application:
**18.12.85 Bulletin 85/51**

(45) Publication of the grant of the patent:
**02.03.88 Bulletin 88/09**

(84) Designated Contracting States:
**DE FR GB NL**

(56) References cited:
**GB-A-1 553 206**

**SOVIET INVENTION ILLUSTRATED DERWENT,
week E 03, 3rd March 1982, London, GB; & SU -
A - 819 601 (EROKHIN SK) 09-04-1981**

(73) Proprietor: **STICHTING WATERBOUWKUNDIG
LABORATORIUM**
**Stieltjesweg 2**
**NL-2600 AB Delft (NL)**

(72) Inventor: **Vegter, Derk**
**Floris van Wevelikhovenstraat 12**
**8325 GD Vollenhove (NL)**

(74) Representative: **van der Beek, George Frans
et al**
**Nederlandsch Octrooibureau Johan de Wittlaan
15 P.O. Box 29720**
**NL-2502 LS 's-Gravenhage (NL)**

Courier Press, Leamington Spa, England.

## Description

The invention relates to a method for controlling a reciprocating wave board for creating surface waves in a body of liquid as well as a system for creating waves using such a method.

Methods and systems of the above indicated type are known in various embodiments, whereby the wave board with its effective wave creating surface is moved in a reciprocating manner either parallel to itself or by pivoting the surface around a horizontal axis, which normally is positioned at the lower end of the wave board.

In the simplest embodiment the position of the wave board is at any moment according to a proportional relation determined by an input signal representing the desired wave pattern to be generated.

Difficulties are encountered because of reflected waves which after the system is in operation for some time, for instance to investigate the wave influences onto a dike talus, can play an important disturbing role. Such waves will disturb the wave pattern generated by the input signal and furthermore especially longer waves will be reciprocating for a long time after the input signal is disappeared, for which reason it takes a long time before the system is ready to be operated again.

According to the British Patent 1,553,206 it is already proposed to measure the force on the wave board as well as the velocity of the wave board to control the wave board drive means such that the velocity thereof is varied by a combination of the input signal for the waves to be generated and said force in such a manner that said force and said velocity are in principle in phase with each other.

The result thereof is a proper damping of a part of the reflected waves, however, in particular no damping occurs of the reflected low frequency waves. The reason therefore is that for a velocity control of the wave board it is necessary to take into account the measured position of the wave board in a highly correcting way to realize a proper control without disturbing the control each time the wave board reaches one of the ultimate positions in which there is no freedom in movement in one direction and in which the stroke is not controlled anymore by the control system. That implies that the system has to operate with a small time constant because of which in particular the longer waves with lower frequency are not or not significantly damped.

An object of the invention is now to enhance this situation and in that respect the invention now provides a method as described in the first paragraph of this description, characterized in that the wave height on the front face of the displacer wave board is measured, that the corresponding signal is integrated in time and subtracted from a wave board position determining control signal which is dependent of the desired wave pattern to be created and that the resulting signal controls the drive means of the wave board such that the signal determines the position of the wave board in relation to a reference position.

A system as indicated in the first paragraph of this description is according to the invention characterized in that the measurement means are functioning for measuring the wave height on the front face of the wave board, that the control means are embodied such that the received wave height signal is integrated in time and subtracted from the received control signal representing the desired wave pattern, whereafter the resulting signal influences the drive means of the wave board such that the signal determines the position of the wave board in relation to a reference position.

It appears to be possible with relatively simple measuring and control apparatus to obtain the desired result of a fast damping of all disturbing waves, especially the longer waves, and to obtain during tests a wave pattern which also in the case that the test is already in operation for some time conforms more accurately to the desired pattern, and to obtain a fast damping of the disturbing waves after a test such that the system is ready to be operated again for the next test after a relatively short waiting time.

It is remarked that it is known to measure the wave height in such a system and to use said measurement for suppression of disturbing waves, however, in such a way that not the position (displacement) of the wave board but the velocity thereof is controlled to maintain the in-phase relationship between wave height and velocity.

Said solution has in principle the same disadvantages as above indicated for the matter described in the British patent 1,553,206.

The invention will now be explained in more detail with reference to the attached drawing, of which Fig. 1 shows a measuring and control diagram of a system according to the invention, Fig. 2 provides a graphical explanation of the system and Fig. 3 explains in a graphicaal way the wave board displacement in case the maximum stroke is reached.

The reciprocating wave board 1 may have a known construction, support and drive system, and is for instance embodied as a vertical displacer which is movable parallel to itself in a reciprocating manner within a gutter, whereby sealing means can be present along the side edges and at the under edge within said gutter. Alternatively the wave board can be of the type which is pivotable around a horizontal axis at the under end thereof transversal to the length direction of the gutter.

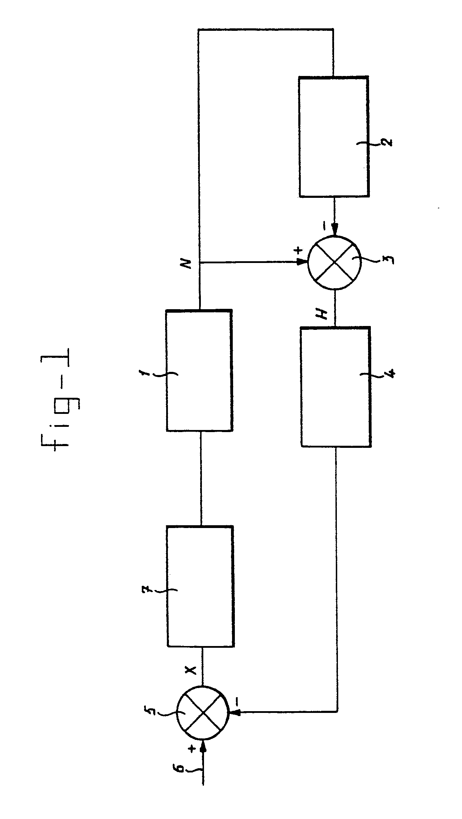

The wave board 1 carries at its front face means to measure the water height, for instance in an electrical way by observing the resistance variation between two long vertical electrodes at short distance of each other, which is a generally known measuring principle. The value, measured by said measuring means, is in the diagram of Fig. 1 indicated by N. The average water level is in 2 calculated out of the measured momentaneous water levels. In junction 3 the average water level is subtracted from the measured momentaneous water level resulting into a signal H representing the momentaneous wave height. Said signal is time integrated into the integrator 4 and the resulting signal is supplied to the junction 5 in which it is subtracted from the input signal, supplied through line 6 and representing the desired wave pattern, for instance for testing a dike talus at the other end of the gutter. The resulting signal X is a measure for the desired position of the wave board in relation to a reference (zero) position, which normally will be the intermediate position, and said signal is supplied to the drive means 7 to drive the wave board 1 such that said desired position is reached.

The control signal of the wave board, delivered at input 6, is therefore superposed to the correction signal relating to the wave height measurement, in principle the wave board drive means is maintained in phase with the time integral of the wave height signal, and if this control signal, delivered at input 6, disappears wave board starts to damp all waves, especially the longer waves, very fast because of the influence of the correction signal.

If the signal for the desired position of the wave board, in other words the displacement (stroke) thereof from a predetermined zero position, is indicated by X and the wave height signal is indicated by H then aside from the control signal at the input 6 the following relation applies to the correction signal:

$$X(t) + \int_{\infty}^{t} H(t)dt = 0.$$

It will be clear that H is the sum of an arbitrary number of harmonic components. The integration from $\infty$ means of course that complete waves from the past do not play any role in the formula and that the integration constantly shifts over the longest last period until the momentaneous time (time t).

After a Fournier-transformation it follows:

$$X(w) = \frac{-H(w)}{(jw)}$$

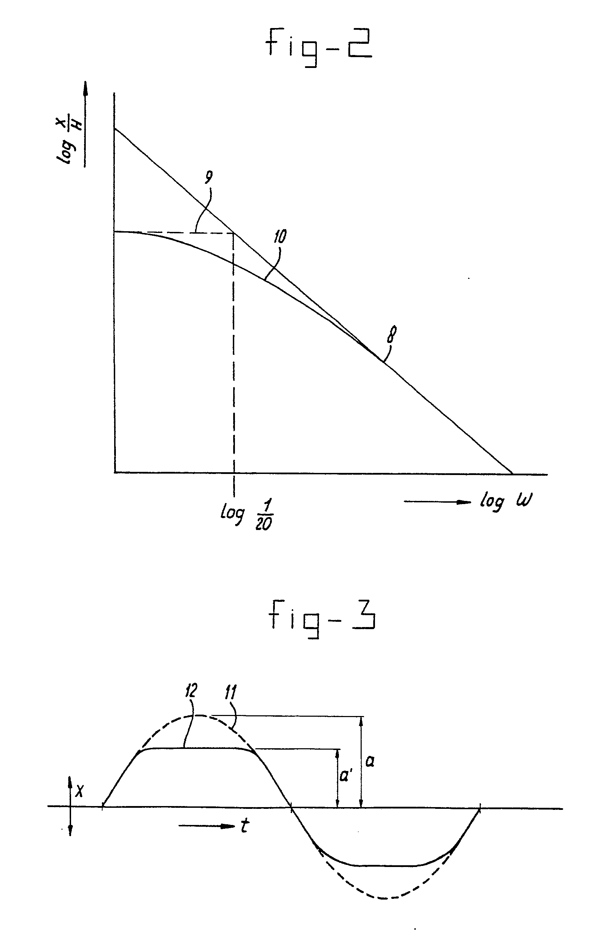

(stationary condition, aside from transition phenomenon) whereby w is the considered wave frequency to be damped and $j = \sqrt{-1}$. In Fig. 2 the vertical axis represents

$$\log \frac{X(w)}{H(w)}$$

and the horizontal axis represents log w, resulting into the straight line 8.

The bandwidth has to be restricted to a frequency domain in which the lowest own frequencies which are able to appear in a predetermined gutter (a half wave length seen in the length direction of the gutter) can be damped. In a certain case the limit frequency is for instance equal to 1/20 radians/sec. The area above line 9 in Fig. 2 therefore has to be cut off. In that way the following formula applies to the actual operating area:

$$X(w) = \frac{-20H}{20(jw)+1}$$

The corresponding curve is indicated by 10 in Fig. 2. Now X is explicitly expressed in terms of H and w, the limits of which also form limits for X, which is maintained under control of the control apparatus independent from the possibility that the wave board thereby approaches or mathematically has to pass an end boundery in its movement.

The output of the summing junction 5 of Fig. 1 has a restricted value which is selected such that the wave board will never reach his mechanical end limits.

If the velocity instead of the position of the wave board drive means was controlled, whereby the velocity signal of the drive means is in principle maintained in phase with the wave height signal, then X is not explicitly expressed in terms of H and w, so that it is not possible to maintain control over X with the control apparatus at the moment that the desired movement should be larger than the maximum allowable movement.

The invention therefore can be adapted to each prior art type of wave board and wave board drive means without any complications.

As simplified example of the damping of one single long wave according to the invention the following details are provided.

There is a long swell present in a predetermined gutter with a wave height of 0,5 m at a water depth of 5 m. For compensating said swell a reciprocating movement of the wave board is necessary from a momentaneous position, for instance the central position, with a calculated amplitude of a = 3,80 m. Set aside any transfer phenomena the displacements of the wave board should follow line 11 in Fig. 3. Because of the limits caused by the maximum stroke of the wave board determined by the construction thereof the maximum amplitude of the wave board is for instance restricted to a' = 2,25 m. The displacements of the wave board will as result of the restriction of the signal X appear as indicated by line 12 in Fig. 3, therewith preventing that the mechanical end limits are reached.

After one reciprocating movement according to Fig. 3 the swell is not completely compensated. During the second reciprocating movement, however, it is not necessary to mathematically pass the end limits and therefore the swell will be compensated completely.

In case the wave board is controlled by means of its velocity and not by means of its position, then the wave board will move until the end limit, causing thereby great troubles because of the much too large acceleration forces at the moment that the wave board stops at the end limit, requiring additional measures for absorbing shocks or preventing shocks, whereas also special means are necessary to make the wave board carry out a larger reciprocating movement than until the end limits by carrying out a further reciprocating movement. The forced velocity pattern will be completely disturbed at the moment said end limits are reached.

It is already remarked that these problems are up to now only soluble by decreasing the active frequency area by excluding the low frequencies, which, however, gives rise to significant problems because of lack of natural damping and reflection at the test objects.

The above indicated example is related to one specific long disturbing wave, which cannot be damped by means of one reciprocating movement of the wave board.

In many practical cases a disturbing wave can be considered as the summation of a number of harmonic waves, which all can be damped by means of one reciprocating movement, whereby it is sometimes but not always necessary to pass an end limit. Therefore according to the invention such disturbing waves can be damped very quick, easy and reliable both in case a control signal is delivered to the input during a test as well as after the test when no control signal is applied.

**Claims**

1. Method for controlling a reciprocating displacer for creating surface waves in a body of liquid, characterized in that the wave height on the front face of the displacer wave board is measured, that the corresponding signal is integrated in time and subtracted from a wave board position determining control signal which is dependent of the desired wave pattern to be created and that the resulting signal controls the drive means of the wave board such that the signal determines the position of the wave board in relation to a reference position.

2. System for creating surface waves in a body of liquid comprising a reciprocatable wave board, measurement and control means for driving said wave board and means for delivering data relating to the desired wave pattern to said control means to move the wave board dependent thereon, characterized in that the measurement means are functioning for measuring the wave height on the front face of the wave board, that the control means are embodied such that the received wave height signal is integrated in time and subtracted from the received control signal representing the desired wave pattern, whereafter the resulting signal influences the drive means of the wave board such that the signal determines the position of the wave board in relation to a reference position.

3. System according to claim 2, characterized in that the measurement means, measuring the wave height, are embodied as means for measuring the momentaneous water level at the front surface of the wave board, which means cooperate with means in the measurement and control system to determine the average water level and to subtract said average water level from the momentaneous water level and to integrate thereafter the difference signal.

4. System according to claim 2 or 3, characterized in that the processing means are embodied such that the bandwidth in the area of the lower frequencies is restricted by excluding those frequencies which are lower than the lowest own frequency which can appear in the body of liquid in the system.

5. System according to one of the claims 2—4, characterized in that the control system is embodied such that the maximum amplitude of the excursion of the wave board out of the zero position is bounded to within the limits set by the maximum excursions of the wave board determined by the constructive parameters thereof.

**Patentansprüche**

1. Verfahren zum Steuern einer hin- und hergehend beweglichen Verdrängereinrichtung zur Erregung von Oberflächenwellen in einem Flüssigkeitsvolumen, dadurch gekennzeichnet, daß die Wellenhöhe an der Vorderseite der Verdränger-Wellenplatte gemessen wird, daß das entsprechende Signal zeitlich aufintegriert und von einem Wellenplatten-Positionsbestimmungskontrollsignal abgezogen wird, das von dem zu erzeugenden gewünschten Wellenmuster abhängig ist, und daß das erhaltene Signal die Antriebseinrichtung der Wellenplatte derart steuert, daß das Signal die Position der Wellenplatte in Bezug auf eine Bezugsposition betimmt.

2. System zur Erregung von Oberflächenwellen in einem Flüssigkeitsvolumen, das eine hin- und hergehend bewegliche Wellenplatte, eine Meßeinrichtung und Steuereinrichtungen zum Antreiben der Wellenplatte sowie eine Einrichtung zur Lieferung von Daten bezüglich des gewünschten Wellenmusters an die Steuereinrichtung aufweist, um die Wellenplatte in Abhängigkeit hiervon zu bewegen, dadurch gekennzeichnet, daß die Meßeinrichtung derart arbeitet, daß die Wellenhöhe an der Vorderseite der Wellenplatte gemessen wird, daß die Steuereinrichtung derart ausgelegt ist, daß das erhaltene Wellenhöhensignal mit der Zeit aufintegriert wird und von dem erhaltenen Steuersignal, das das gewünschte Wellenmuster darstellt, subtrahiert wird, und daß anschließend das erhaltene Signal die Antriebseinrichtung der Wellenplatte derart beeinflußt, daß das Signal die Position der Wellenplatte bezüglich einer Bezugsposition bestimmt.

3. System nach Anspruch 2, dadurch gekennzeichnet, daß die Meßeinrichtung zur Messung der Wellenhöhe als eine Einrichtung zum Messen des momentanen Wasserpegels an der Vorderseite der Wellenplatte ausgelegt ist, und daß die Einrichtung mit der Einrichtung in dem Meß- und Steuersystem derart zusammenarbeitet, daß der mittlere Wasserpegel bestimmt wird und daß dieser mittlere Wasserpegel von dem momentanen Wasserpegel abgezogen und anschließend das Differenzsignal aufintegriert wird.

4. System nach Anspruch 2 oder 3, dadurch gekennzeichnet, daß die Verarbeitungseinrichtung derart ausgelegt ist, daß die Bandbreite im Bereich der unteren Frequenzen dadurch begrenzt ist, daß jene Frequenzen ausgeschlossen werden, die niedriger als die tiefste Eigenfrequenz ist, die in dem Flüssigkeitsvolumen im System auftreten kann.

5. System nach einem der Ansprüche 2 bis 4, dadurch gekennzeichnet, daß das Steuersystem derart ausgelegt ist, daß die maximale Amplitude der Auslenkung der Wellenplatte aus ihrer Nullposition innerhalb den Grenzen begrenzt ist, die durch die maximalen Auslenkungen der Wellenplatte vorgegeben sind, die durch ihre Konstruktionsparameter bestimmt sind.

**Revendications**

1. Procédé pour commander un élément déplaceur effectuant un mouvement de va-et-vient pour créer des ondes de surface dans un volume de liquide, caractérisée en ce que l'on mesure la hauteur des ondes sur la face avant de la plaque de formation d'ondes de l'élément déplaceur, que l'on intègre dans le temps le signal correspondant et qu'on le soustrait d'un signal de commande déterminant la position de la plaque de formation d'ondes, signal qui est dépendant de la forme d'ondes à créer que l'on désire, et le signal résultant commande les moyens d'entraînement de la plaque de formation d'ondes de façon telle que le signal détermine la position de la plaque de formation d'ondes par rapport à une position de référence.

2. Système pour créer des ondes de surfaces dans un volume de liquide, comprenant une plaque de formation d'ondes animée d'un mouvement de va-et-vient, des moyens de mesure et de commande pour entraîner ladite plaque de formation d'ondes et des moyens pour appliquer des données concernant la forme d'onde désirée auxdits moyens de commande de manière à déplacer la plaque de formation d'ondes en fonction de celles-ci, caractérisé en ce que les moyens de mesure fonctionnent pour mesurer la hauteur des ondes sur la face avant de la plaque de formation d'ondes, les moyens de commande sont constitués de manière que le signal de hauteur d'onde reçu soit intégré dans le temps et soustrait du signal de commande reçu représentant la forme d'onde désirée, suite à quoi le signal résultant agit sur les moyens d'entraînement de la plaque de formation d'ondes de manière telle que le signal détermine la position de la plaque de formation d'ondes par rapport à une position de référence.

3. Système selon la revendication 2, caractérisé en ce que les moyens de mesure, qui mesurent la hauteur des ondes, sont constitués sous forme de moyens pour mesurer le niveau momentané de l'eau sur la surface avant de la plaque de formation d'ondes, lesdits moyens coopérant avec des moyens du système de mesure et de commande pour déterminer le niveau moyen de l'eau et pour soustraire ledit niveau moyen de l'eau du niveau momentané de l'eau et pour intégrer ensuite le signal de différence.

4. Système selon la revendication 2 ou 3, caractérisé en ce que les moyens de traitement sont constitués de manière que la largeur de bande dans la région des basses fréquences soit restreinte par exclusion des fréquences qui sont inférieures à la fréquence propre la plus basse qui peut apparaître dans le volume d'eau du système.

5. Système selon l'une quelconque des revendications 2 à 4, caractérisé en ce que le système de commande est constitué de manière que l'amplitude maximale de l'excursion de la plaque de formation d'ondes par rapport à la position zéro soit limitée aux limites fixées par les excursions maximales de la plaque de formation d'ondes qui sont déterminées par ses paramètres de construction.

fig-1

0 164 811

# Fig-2

# Fig-3

2